# DEMANDE DE BREVET EUROPEEN

(11) **EP 2 447 433 A1**
(43) Date de publication de la demande: **02.05.2012**
(21) Numéro de dépôt: 10189218.0
(22) Date de dépôt: 28.10.2010
(51) Int. Cl.: E04B 2/02

(54) **Élément de construction en terre crue**

(71) Demandeur: Terraco Group sprl, 1320 Beauvechain (BE)
(72) Inventeur: Despret, Géry, 1320 Beauvenchain (BE)
(74) Mandataire: Vandeberg, Marie-Paule L.G.

(57) **Abrégé**

La présente invention concerne un élément de construction (1) en terre crue argileuse comprimée, apte à s'agréger sur au moins une de ses faces (4) à un élément adjacent par l'intermédiaire d'un enduit comprenant une solution géliforme activable (5) s'étendant sur l'au moins une face de l'élément (4).

L'invention porte aussi sur un procédé d'assemblage d'une partie d'édifice à partir d'éléments (1).

## Description

### Domaine de l'invention

L'invention se rapporte à des éléments de construction en terre crue comprimée.

L'invention se rapporte aussi à un procédé d'assemblage d'une partie d'édifice à partir de tels éléments.

### Introduction

La terre crue est utilisée depuis des millénaires comme matériau de construction. Elle est encore toujours le matériau de construction le plus répandu à travers le monde. Un tiers de l'humanité vit dans un habitat en terre, soit plus de deux milliards de personnes dans 150 pays, le plus souvent dans le tiers-monde.

La terre crue sous une forme stabilisée connaît également désormais un intérêt dans les pays occidentaux notamment en raison de ses propriétés s'inscrivant dans la démarche du développement durable : excellente durabilité, réduction des coûts de transport et de transformation (pratiquement sans dépenser d'énergie), grande inertie thermique, recyclage aisé des gravats etc. La stabilisation de la terre crue, qui vise à réduire sa sensibilité à l'eau et à augmenter sa résistance mécanique, peut être effectuée par compression/compactage et/ou par voie chimique, par exemple en ajoutant de la chaux. Il existe différentes techniques de mise en oeuvre de terre crue stabilisée, dont le pisé et les blocs de terre comprimée. Ces techniques exigent toutefois beaucoup de temps et de main d'oeuvre.

D'autres avantages de la terre crue résident en son caractère incombustible et sain, notamment hypoallergénique.

Par ailleurs, la mise en oeuvre de terre crue présente aussi un intérêt esthétique, car elle permet une grande variété architecturale ainsi que des formes d'apparence complexe : murs, cloisons, voûtes, coupoles, corniches, éléments décoratifs de façade, etc.

Les architectes et les entreprises actives dans la mise en oeuvre de la terre crue s'efforcent de répandre ce mode de construction d'avenir, à la fois économique, sain, flexible au niveau de ses applications et à faible empreinte écologique. A cet effet, ces entreprises visent à augmenter la qualité de leurs édifices et leur productivité tout en réduisant autant que possible les coûts de main d'oeuvre.

### État de la technique

On connaît de tels éléments de construction en terre crue comprimée, par exemple, dans le document FR 2 861 010 qui divulgue un procédé de préfabrication d'éléments architectoniques stabilisés en pisé. L'assemblage de ces éléments n'y est toutefois pas décrit.

Cette remarque vaut également pour la demande FR 2 527 136 qui concerne un procédé de stabilisation d'éléments de construction réalisés en terre comprimée au moyen d'un compactage dynamique d'un mélange terre-eau-liant par la chute libre d'une masse.

Les documents FR 2 936 534 et FR 2 509 344 concernent des blocs en terre compressée et stabilisée présentant des profils permettant leur emboîtement et auto-alignement pour le montage de murs. Les blocs sont solidarisés entre eux par de la colle ou du mortier.

La demande internationale WO 1986/06126 porte sur des blocs auto-emboîtants en terre hyperpressée et stabilisée à froid pour la construction de murs sans joint. La stabilité de ces blocs est assurée par des injections de mortier liquide.

Le document FR 2 638 187 se rapporte à un bloc de construction en terre comprimée dont les faces apparentes sont constituées chacune d'une plaque de protection contre l'érosion. La solidarité entre les blocs est assurée par du mortier en tant que liant.

La demande internationale WO 2008/062299 porte sur des blocs de terre stabilisés qui comprennent une partie intérieure en terre non stabilisée et une fine couche en terre stabilisée sur une ou deux faces, lesquelles faces servent à protéger le mur construit avec de tels blocs contre l'humidité, l'effritement et l'abrasion. Les blocs de terre sont solidarisés par du mortier.

Dans ces cinq derniers documents, les blocs en terre crue comprimée décrits sont assemblés de manière traditionnelle par des moyens tels que la colle ou du mortier.

Ces moyens traditionnels présentent plusieurs inconvénients. En premier lieu ils ne permettent qu'une adhérence superficielle entre les éléments de construction. En outre, leur fabrication nécessite généralement une quantité non négligeable d'énergie et leur recyclage après démolition des édifices ainsi assemblés est difficile, ce qui est défavorable pour leur empreinte écologique. Par ailleurs, l'imprégnation des surfaces des éléments de construction au moment de l'assemblage prend beaucoup de temps, ce qui nuit à la productivité.

### Résumé de l'invention

Un but de l'invention est de procurer un élément de construction en terre crue comprimée présentant des propriétés s'inscrivant dans le cadre du développement durable tout en permettant la réalisation de parties d'édifices dans des conditions optimales de tenue mécanique (stabilité), et de productivité.

Par élément de construction on entend dans la présente demande tout élément, porteur ou non, pouvant être mis en oeuvre dans le domaine de la construction, tel qu'un élément de maçonnerie, un élément de cloison, un élément de plancher, un élément de revêtement extérieur ou intérieur, un élément de décoratif extérieur ou intérieur etc.

A cette fin, l'élément de construction en terre crue argileuse comprimée selon l'invention est apte à s'agréger sur au moins une de ses faces à un élément adjacent par l'intermédiaire d'un enduit. Celui-ci comprend une solution géliforme activable s'étendant sur l'au moins une face de l'élément.

Cette solution géliforme une fois activée est de nature à faire réagir entre elles les surfaces en contact des éléments adjacents. Il s'en suit que dans la zone de contact les matériaux interagissent et s'agrègent sous l'effet de phénomènes physico-chimiques, ce qui lie en profondeur les éléments entre eux sans former de joint et favorise donc la stabilité de parties d'édifices ainsi assemblées.

L'avantage de ce procédé est que l'on peut utiliser pour cette solution géliforme des éléments naturels, abondants et non toxiques, ce qui élimine tous les problèmes de transport et/ou de recyclage des déchets de construction.

Un autre but de l'invention est d'atteindre un effet esthétique particulier en utilisant un type de terre généralement négligé en raison de ses propriétés mécaniques.

A cette fin, la terre crue argileuse utilisée dans les éléments de construction selon l'invention est caractérisée par un indice de plasticité compris de préférence entre 10 et 35 (valeurs indicatives pour des terres « plastiques »), et de façon préférée supérieur à 35 (valeurs indicatives pour des terres « très plastiques »). Ces terres, habituellement utilisées dans le domaine de la poterie et de l'industrie de la terre cuite, donnent à l'élément de construction une porosité de surface très faible et par conséquent un aspect fini de plus grande qualité.

Avantageusement, la terre crue argileuse comprend 3,00 à 8,00 % en poids de chaux éteinte avant ou après compression. Ces teneurs en stabilisant permettent, de façon surprenante, à des réactions pouzzolaniques à court, moyen et long terme d'avoir une ampleur fort bénéfique, particulièrement en cas d'usage de terres plastiques à très plastiques, pour la durabilité ainsi que pour la résistance à l'érosion et à la compression de l'élément de construction selon l'invention.

La terre argileuse comprend avantageusement 3,00 à 6,00 % en poids d'une smectite à fort gonflement à choisir parmi la montmorillonite et la bentonite sodique, avant ou après compression. Ces teneurs en smectite fort gonflante favorisent l'imperméabilisation et donc la résistance au gel des éléments de construction.

Avantageusement, la solution géliforme activable enduisant l'élément de construction comprend de la smectite à fort gonflement, à choisir parmi la montmorillonite et la bentonite sodique. Ces argiles, en gonflant lors de l'activation, amplifient le phénomène d'agrégation à l'interface entre éléments adjacents.

La solution géliforme activable comprend de préférence des fines argileuses présentant un indice de plasticité supérieur à 35.

Un autre but de l'invention est de procurer un procédé d'assemblage d'une partie d'édifice à partir d'éléments de terre crue argileuse présentant des propriétés s'inscrivant dans le cadre du développement durable, qui permet sa réalisation dans des conditions optimales de tenue mécanique (stabilité), et de productivité.

A cette fin, le procédé d'assemblage d'une partie d'édifice selon l'invention, comprend la mise à disposition d'un moule et son remplissage par une terre crue argileuse qui est ensuite comprimée. Un élément de construction est ainsi formé. Il est ensuite démoulé puis séché. Un enduit comprenant une solution géliforme activable est alors appliqué sur au moins une des faces de l'élément de construction qui est ensuite séché. Après stockage, les faces à assembler d'un premier et d'un deuxième éléments de construction sont badigeonnées de façon à activer la solution géliforme. Ces faces sont mises en contact et pressées l'une contre l'autre. Sous l'effet de la solution géliforme activée, la zone de contact se ramollit et gonfle. Les deux éléments accolés s'agrègent. On laisse ensuite sécher la partie d'édifice.

Les parties d'édifice réalisées selon le procédé de l'invention présentent, de par l'agrégation mutuelle des éléments de construction constitutifs, une tenue mécanique accrue, ce qui est avantageux, notamment dans des zones présentant une activité sismique.

Ce procédé présente également l'avantage que les opérations d'application de la solution géliforme et de badigeonnage pour sa réactivation sont à la fois extrêmement simples et rapides. Cette technique favorise donc la productivité et l'accessibilité à une main d'oeuvre faiblement qualifiée que l'on rencontre en grand nombre dans les pays à faibles revenus.

Outre ses avantages socio-économiques, le procédé selon l'invention a aussi un impact favorable sur l'environnement et le développement durable. Il permet notamment de valoriser des terres locales non agricoles qui, dans de nombreux cas, constituent une source de matériau quasi inépuisable. Le procédé ne requiert pratiquement pas d'énergie et n'utilise pas de produits chimiques. Par ailleurs, les constructions sont, après démolition, facilement recyclables.

D'une façon générale, le procédé d'assemblage selon l'invention est parfaitement en phase avec le développement d'une économie axée sur la rentabilité, la durabilité et l'amélioration des conditions d'existence humaines. Il est de plus applicable pratiquement partout, quelque soit le niveau de développement local considéré.

Par ailleurs, le procédé selon l'invention a également un impact esthétique, car du fait de l'agrégation des éléments de construction constituant la partie d'édifice, il n'y a pas de joints. La partie d'édifice a donc l'apparence extérieure d'un voile, ce qui permet d'économiser l'application d'un revêtement égalisateur.

Dans le procédé selon l'invention, l'opération de séchage de l'enduit est avantageusement un étuvage. Cette disposition permet d'augmenter la productivité.

Selon l'invention, le badigeon est de préférence un lait de chaux.

Par ailleurs, le badigeon peut comprendre de fines argileuses présentant un indice de plasticité supérieur à 35.

Dans le procédé d'assemblage selon l'invention on utilise de façon avantageuse une terre crue argileuse présentant un indice de plasticité compris de préférence entre 10 et 35, et de façon préférée supérieur à 35. Ces terres, habituellement utilisées dans le domaine de la poterie et de l'industrie de la terre cuite, donnent à l'élément de construction une porosité de surface très faible et par conséquent un aspect fini de plus grande qualité.

Selon le procédé d'assemblage de l'invention, on utilise avantageusement de la terre crue argileuse comprenant 3,00 à 8,00 % en poids de chaux éteinte avant ou après compression. Ces teneurs en stabilisant permettent de façon surprenante des réactions pouzzolaniques à court, moyen et long terme d'une ampleur fort bénéfique, particulièrement en cas d'usage de terres plastiques à très plastiques, pour la durabilité ainsi que pour la résistance à l'érosion et à la compression de l'élément de construction selon l'invention.

Avantageusement, on utilise de la terre argileuse comprenant 3,00 à 6,00 % en poids (avant ou après compression) d'une smectite à fort gonflement à choisir parmi la montmorillonite et la bentonite sodique. Ces teneurs en smectite fort gonflante favorisent l'imperméabilisation et donc la résistance au gel des éléments de construction.

On utilise avantageusement dans le procédé d'assemblage selon l'invention une solution géliforme comprenant de la smectite à fort gonflement à choisir parmi la montmorillonite et la bentonite sodique. Ces argiles en gonflant amplifient le phénomène d'agrégation à l'interface entre éléments adjacents.

Selon le procédé d'assemblage selon l'invention, on utilise de préférence une solution géliforme comprenant de fines argileuses présentant un indice de plasticité supérieur à 35.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
La Fig.1 représente schématiquement en perspective une partie d'édifice (ici, un bloc de construction) selon le procédé de l'invention ;
Les Fig.2 a à 2c et la Fig.3 sont des vues en coupe suivant le plan II-II de la Fig. 1 de différents stades d'assemblage de deux éléments de construction de la Fig. 1.

Les figures ne sont pas dessinées à l'échelle. Généralement, des éléments semblables sont dénotés par des références semblables dans les figures.

### Description détaillée d'un mode de réalisation particulier

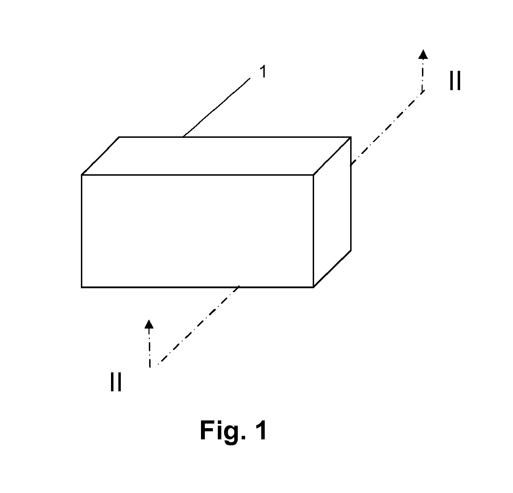

A la Fig. 1, l'on voit un élément de construction (ici un parpaing) 1 coupé par un plan II-II.

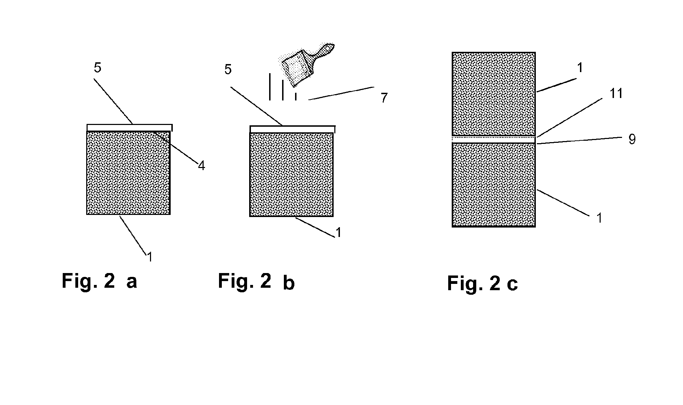

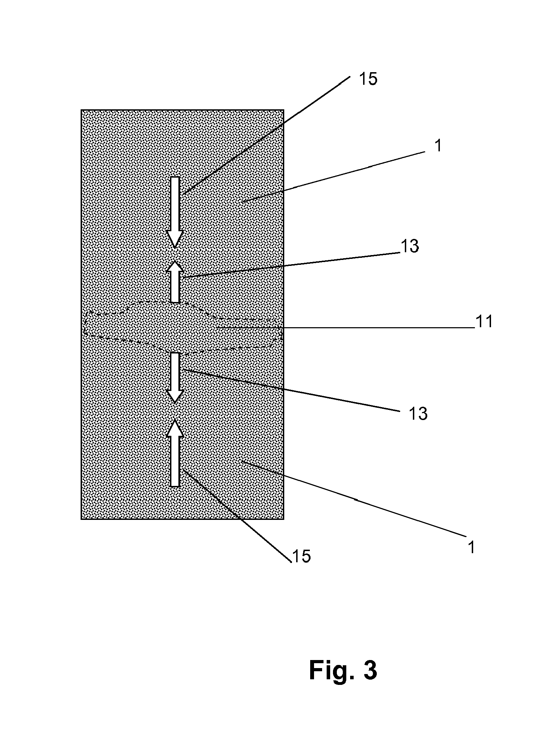

La Fig. 2a montre la section transversale de cet élément de construction 1 dont une face 4 est revêtue d'un enduit comprenant une solution géliforme activable 5. Au moment de l'assemblage de deux éléments 1 sur la face 4, un lait de chaux 7 est appliqué sur cette face (Fig. 2b). Celui-ci a pour effet que la solution 5 passe à l'état activé 9. Après assemblage (Fig. 2c), des phénomènes physico-chimiques viennent bouleverser, sous l'effet de la solution géliforme activée 9, la zone de contact 11 entre les deux éléments 1. En effet, des réactions pouzzolaniques, des effets de ramollissement et de gonflement ainsi que d'autres effets physiques (par exemple : diffusion, phénomènes électriques etc....) déplacent les limites de cette zone 11 vers l'intérieur de chacun des éléments 1 dans le sens des flèches 13 et ont pour résultat que les deux éléments 1 s'agrègent l'un à l'autre, comme cela est représenté à la Fig. 3. Les deux éléments 1 se fondent finalement en un seul sans former de joint.

La liaison entre les éléments 1 n'est donc pas superficielle mais s'étend en profondeur. En outre, les effets de gonflement entraînent par réaction une compression supplémentaire selon les flèches 15 dans chaque élément 1. Ces phénomènes d'agrégation et de compression sont bénéfiques pour la stabilité d'une partie d'édifice constituée de tels éléments de construction 1.

Il apparaîtra évident pour l'homme du métier que la présente invention n'est pas limitée aux exemples illustrés et décrits ci-dessus. L'invention comprend chacune des caractéristiques nouvelles ainsi que leur combinaison. La présence de numéros de référence ne peut être considérée comme limitative. L'usage du terme « comprend » ne peut en aucune façon exclure la présence d'autres éléments autres que ceux mentionnés. L'usage de l'article défini « un » pour introduire un élément n'exclut pas la présence d'une pluralité de ces éléments. La présente invention a été décrite en relation avec des modes de réalisations spécifiques, qui ont une valeur purement illustrative et ne doivent pas être considérés comme limitatifs.

## Revendications

1. Elément de construction (1) en terre crue argileuse comprimée, apte à s'agréger sur au moins une de ses faces (4) à un élément (1) adjacent par l'intermédiaire d'un enduit comprenant une solution géliforme activable (5) s'étendant sur l'au moins une face (4) de l'élément (1).

2. Elément de construction selon la revendication 1, **caractérisé en ce que** la terre crue argileuse présente un indice de plasticité compris entre 10 et 35.

3. Elément de construction selon la revendication 1, **caractérisé en ce que** la terre crue argileuse présente un indice de plasticité supérieur à 35.

4. Elément de construction selon l'une quelconque des revendications précédentes, **caractérisé en ce que** la terre crue argileuse comprend 3,00 à 8,00 % en poids de chaux éteinte.

5. Elément de construction selon l'une quelconque des revendications précédentes, **caractérisé en ce que** la terre crue argileuse comprend 3,00 à 6,00 % en poids d'une smectite à fort gonflement à choisir parmi la montmorillonite et la bentonite sodique.

6. Elément de construction selon l'une quelconque des revendications précédentes, **caractérisé en ce que** la solution géliforme activable (5) comprend de la smectite à fort gonflement à choisir parmi la montmorillonite et la bentonite sodique.

7. Elément de construction selon l'une quelconque des revendications précédentes, **caractérisé en ce que** la solution géliforme activable (5) comprend de fines argileuses présentant un indice de plasticité supérieur à 35.

8. Procédé d'assemblage d'une partie d'édifice à partir d'éléments (1) de terre crue argileuse comprimée, **caractérisé en ce qu'**il comprend les opérations suivantes :
- mise à disposition d'un moule ;
- remplissage de ce moule par une terre crue argileuse ;
- compression de cette terre ;
- démoulage et séchage d'un élément de construction (1) ainsi formé ;
- application d'un enduit comprenant une solution géliforme activable (5) sur au moins une des faces (4) de l'élément de construction (1);
- séchage de cet enduit ;
- stockage ;
- badigeonnage des faces (4) à assembler d'un premier et d'un deuxième éléments de construction (1), de façon à activer la solution géliforme (5) ;
- mise en contact et pressage de ces faces (4) l'une contre l'autre;
- ramollissement et gonflement de la zone de contact (11) sous l'effet de la solution géliforme activée (9) ;
- agrégation des deux éléments accolés (1) ;
- séchage de la partie d'édifice.

9. Procédé d'assemblage d'une partie d'édifice selon la revendication 8, **caractérisé en ce que** l'opération de séchage de l'enduit est un étuvage.

10. Procédé d'assemblage d'une partie d'édifice selon la revendication 8 ou 9, **caractérisé en ce que** le badigeon est un lait de chaux (7).

11. Procédé d'assemblage d'une partie d'édifice selon l'une quelconque des revendications 8 à 10, **caractérisé en ce que** le badigeon comprend de fines argileuses présentant un indice de plasticité supérieur à 35.

12. Procédé d'assemblage d'une partie d'édifice selon l'une quelconque des revendications 8 à 11, **caractérisé en ce que** la terre crue argileuse présente un indice de plasticité compris entre 10 et 35.

13. Procédé d'assemblage d'une partie d'édifice selon l'une quelconque des revendications 8 à 11, **caractérisé en ce que** la terre crue argileuse présente un indice de plasticité supérieur à 35.

14. Procédé d'assemblage d'une partie d'édifice selon l'une quelconque des revendications 8 à 13, **caractérisé en ce que** la terre crue argileuse comprend 3,00 à 8,00 % en poids de chaux éteinte.

15. Procédé d'assemblage d'une partie d'édifice selon l'une quelconque des revendications 8 à 14, **caractérisé en ce que** la terre argileuse comprend 3,00 à 6,00 % en poids d'une smectite à fort gonflement à choisir parmi la montmorillonite et la bentonite sodique.

16. Procédé d'assemblage d'une partie d'édifice selon l'une quelconque des revendications 8 à 15, **caractérisé en ce que** la solution géliforme (5) comprend de la smectite à fort gonflement à choisir parmi la montmorillonite et la bentonite sodique.

17. Procédé d'assemblage d'une partie d'édifice selon l'une quelconque des revendications 8 à 16, **caractérisé en ce que** la solution géliforme (5) comprend de fines argileuses présentant un indice de plasticité supérieur à 35.
